# EUROPÄISCHE PATENTSCHRIFT

(11) **EP 2 850 680 B1**
(45) Veröffentlichungstag und Bekanntmachung des Hinweises auf die Patenterteilung: **17.05.2017**
(21) Anmeldenummer: 13727133.4
(22) Anmeldetag: 03.06.2013
(51) Int. Cl.: H01M 12/08, H01M 4/62, H01M 4/02

(54) **SPEICHERSTRUKTUR EINER ELEKTRISCHEN ENERGIESPEICHERZELLE**
STORAGE STRUCTURE OF AN ELECTRICAL ENERGY STORAGE CELL
STRUCTURE ACCUMULATRICE D'UN ÉLÉMENT D'ACCUMULATION D'ÉNERGIE ÉLECTRIQUE

(30) Priorität: 03.07.2012 DE 102012211474
(43) Veröffentlichungstag der Anmeldung: 25.03.2015
(73) Patentinhaber: Siemens Aktiengesellschaft, 80333 München (DE)
(72) Erfinder: BENKERT, Katrin, 90571 Schwaig (DE); SOLLER, Thomas, 94469 Deggendorf (DE)
(86) Internationale Anmeldenummer: PCT/EP2013/061395
(87) Internationale Veröffentlichungsnummer: WO 2014/005773

(56) Entgegenhaltungen:
- WO-A1-2011/019455
- WO-A1-2012/033623
- WO-A1-2012/038312
- WO-A1-2012/177356
- WO-A1-2013/104615
- WO-A2-2013/110509
- US-A1- 2011 256 448
- LORENTE E ET AL: "Conceptual design and modelling of the Steam-Iron process and fuel cell integrated system", INTERNATIONAL JOURNAL OF HYDROGEN ENERGY, ELSEVIER SCIENCE PUBLISHERS B.V., BARKING, GB, Bd. 34, Nr. 13, 1. Juli 2009 (2009-07-01), Seiten 5554-5562, XP026211758, ISSN: 0360-3199, DOI: 10.1016/J.IJHYDENE.2009.04.062 [gefunden am 2009-05-30]

## Beschreibung

Die Erfindung betrifft eine Speicherstruktur einer elektrischen Energiespeicherzelle nach dem Oberbegriff des Patentanspruchs 1.

Überschüssige elektrische Energie, die beispielsweise aus erneuerbaren Energiequellen hervorgeht, lässt sich nur im bedingten Umfang im Stromnetz speichern. Dies gilt auch für überschüssige Energie, die dann bei fossilen Kraftwerken anfällt, wenn diese im optimalen wirtschaftlichen Lastbereich laufen, vom Verbraucher jedoch aus dem Netz nicht abgerufen wird. Für die Zwischenspeicherung dieser überschüssigen Energien in größeren Mengen gibt es verschiedene Großspeichervorrichtungen. Eine davon ist zum Beispiel ein Pumpspeicherkraftwerk. Auf dem Batteriesektor besteht ein Ansatz für einen elektrischen Energiespeicher darin, sogenannte Rechargeable Oxide Batteries (ROB) also Hochtemperatur-Metall-Luft-Batterien einzusetzen. Bei diesen Batterien wird ein metallbasiertes Speichermedium je nach Batteriezustand (Laden oder Entladen) reduziert oder oxidiert. Bei einer Vielzahl dieser zyklischen Lade- und Entlade- also Reduktions- und Oxidationsvorgänge des Speichermediums neigt dieses Medium bei den anliegenden vergleichsweise hohen Betriebstemperaturen einer solchen Batterie, die üblicherweise zwischen 600°C und 900°C liegen, dazu, dass die geforderte Mikrostruktur, insbesondere die Porenstruktur des Speichermediums und die Partikelgrößenverteilung des aktiven Speichermaterials, durch Sinterprozesse zerstört wird. Dies führt zu einer Alterung und anschließend zu einem Versagen der Batterie.

Die Aufgabe der Erfindung besteht darin, eine Speicherstruktur einer elektrischen Energiespeicherzelle bereitzustellen, die gegenüber dem Stand der Technik eine höhere Langzeitbeständigkeit aufweist und einer höheren Zyklenzahl von Lade-und Entladevorgängen stand hält.

Die Lösung der Aufgabe besteht in einer Speicherstruktur einer elektrischen Metall-Luft-Energiespeicherzelle mit den Merkmalen des Patentanspruchs 1.

Die erfindungsgemäße Speicherstruktur umfassende Energiespeicherzelle ist Bestandteil einer elektrischen Metall-Luft-Batterie. Metall-Luft-Batterie sind zum Beispiel aus WO2012038312 bekannt. Eine derartige Metall-Luft-Batterie umfasst in der Regel mehrere Energiespeicherzellen, die in der Regel wiederum zu Stacks zusammengefasst sind. Die Speicherstruktur an sich umfasst wiederum ein aktives Speichermaterial und sie zeichnet sich dadurch aus, dass die Speicherstruktur einen Kernbereich und mindestens einen Schalenbereich aufweist, wobei das Material im Kernbereich eine höhere Porosität aufweist als das Material des Schalenbereichs. Dies resultiert darin, dass die aktiven Speichermaterialien des Schalen- und Kernbereichs unterschiedliche Oxidationsgeschwindigkeiten aufweisen.

Der grundsätzliche Aufbau der Speicherstruktur in eine Trennung von Kernbereich und Speicherbereich führt in dem Fall, dass das Material des Kernbereichs eine höhere Oxidationsgeschwindigkeit als das Material des Schalenbereichs aufweist dazu, dass zunächst das Speichermaterial im Kernbereich chemisch umgewandelt, also oxidiert wird. Durch die Oxidation wird eine Volumenzunahme induziert, die wiederum dazu führt, dass sich Poren, die zum Transport eines sogenannten Shuttlegases benötigt werden, verengen oder mit der Zeit verschwinden. Daher ist es günstiger, dass der Kernbereich der Speicherstruktur schneller oxidiert bzw. chemisch umgewandelt wird als der Schalenbereich. Der Schalenbereich weist demnach auch nach fortgeschrittener Oxidation des Speichermaterials im Kernbereich noch eine genügend hohe Porosität auf, um das Gas, das mit dem aktiven Speichermaterial eine Reaktion eingeht, dort hinzutransportieren. Dabei ist es nicht notwendig, dass der Schalenbereich den Kernbereich vollständig umgibt. Auch ein schichtförmiger Aufbau ist zweckmäßig, der Schalenbereich sollte aber bezüglich eines Strömungsweges bzw. Diffusionsweges eines Reaktionsgases zwischen der Speicherelektrode und dem Kernbereich angeordnet sein.

Es hat sich als besonders zweckmäßig herausgestellt, dass das Speichermaterial sowohl im Schalenbereich als auch im Kernbereich auf der Basis von Eisen und/oder Eisenoxid ausgebildet ist. Das Eisenoxid liegt üblicherweise bei der Herstellung der Speicherstruktur in Form von Fe₂O₃ (Eisen (III)-Oxid) vor, während des Betriebs der Speicherzelle ändert sich in der Regel die Oxidationsstufe des Eisens, weshalb der Betrieb der Speicherzelle mit den Verbindungen FeO (Eisen (II)-Oxid) und/oder Fe₃O₄ (Eisen (II, III)-Oxid) erfolgt. Das aktive Speichermaterial liegt insbesondere in Form eines Redoxpaares vor, das aus Eisen und Eisenoxid besteht, wobei der Anteil der jeweiligen Komponenten abhängig vom Ladezustand der elektrischen Speicherzelle ist.

In einer weiteren vorteilhaften Ausgestaltungsform der Erfindung weist das Speichermaterial im Schalenbereich eine Dotierung auf, die eines oder mehrere Elemente aus der Gruppe Chrom, Kobalt, Aluminium, Silizium, Titan oder Mangan umfasst. Durch eine derartige Dotierung kann die Oxidationsgeschwindigkeit des Speichermaterials beeinflusst werden. Es hat sich herausgestellt, dass die Elemente aus der genannten Gruppe die Oxidationsgeschwindigkeit des Speichermaterials verlangsamen. Daher ist es zweckmäßig den Schalenbereich mit dotierten Stoffen zu versehen, die eine Verringerung der Oxidationsgeschwindigkeit bewirken.

Im Gegenzug dazu hat es sich als zweckmäßig herausgestellt, den Kernbereich mit einer Dotierung zu versehen, die eine oder mehrere Elemente aus der Gruppe Molybdän, Vanadium, Bor oder Bismut umfasst. Eine Dotierung mit den genannten Stoffen führt zu einer Beschleunigung der Oxidation. Diese Elemente als Dotierstoffe tragen in Kombination mit der höheren Porosität des Kernbereichs zu einer bevorzugten Oxidation des Kernbereichs bei.

Hierfür hat es sich als zweckmäßig herausgestellt, dass das Speichermaterial im Schalenbereich eine Porosität von weniger als 40% aufweist. Ebenso kann es zweckmäßig sein, dass das Speichermaterial im Kernbereich, in dem eine höhere Porosität vorliegt, eine Porosität von weniger als 50% aufweist.

Es hat sich ferner als zweckmäßig herausgestellt, dass das aktive Speichermaterial im Schalenbereich und im Kernbereich eine Korngrößenverteilung aufweist, deren d50-Wert kleiner als 5 µm und deren d90-Wert kleiner als 10 µm ist. Bei der genannten Partikelgrößenverteilung handelt es sich um die Partikelgrößenverteilung der Ausgangsstoffe des aktiven Speichermaterials für die Speicherstruktur. In der fertig gestellten Speicherstruktur liegen die einzelnen Körner des aktiven Speichermaterials in gepresster bzw. vorgesinterter Form vor, so dass es mikroskopisch zu Agglomeraten kommt bzw. zu stoffschlüssigen Verbindungen in Kontaktbereichen, die auch als Sinterhälse bezeichnet werden. Die einzelnen Körner können sich somit durch eine Temperaturbehandlung an den Kontaktbereichen durch Diffusionsvorgänge verbinden, was dazu führt, dass sie als größeres Korn mikroskopisch sichtbar werden. Daher wird zur stofflichen Charakterisierung des aktiven Speichermaterials die Partikelgrößenverteilung des Ausgangsmaterials verwendet, wobei sich diese Partikelgrößenverteilung, wenn auch mit stoffschlüssigen Kontaktflächen in der Mikrostruktur des fertig gestellten Speichermaterials bzw. der fertig gestellten Speicherstruktur, widerspiegelt.

Ferner hat es sich als zweckmäßig herausgestellt, dass das Speichermaterial im Schalenbereich und im Kernbereich ein dort eingelagertes Inertmaterial aufweist. Hierbei wird unter dem Begriff inert verstanden, dass sich ein chemisches Gleichgewicht zwischen dem inerten Material und einem möglichen Reaktanden so langsam einstellt, so dass es bei den vorherrschenden Betriebstemperaturen zu keinen Reaktionen kommt, die die Funktionalität der Speicherstruktur nachhaltig beeinflussen. Darunter wird insbesondere ein inertes Verhalten gegenüber einem gasförmigen oder flüssigen Reaktanden verstanden, der wiederum eine Reaktion mit dem Speichermaterial eingeht. Außerdem wird hierunter ein inertes Verhalten gegenüber dem Speichermaterial an sich verstanden. Insbesondere kommt als Inertmaterial neben anderen keramischen Materialien Zirkonoxid, yttriumverstärktes Zirkonoxid, Aluminiumoxid, Yttriumoxid, Calciumoxid, Ceroxid oder Magnesiumoxid sowie Kombinationen hiervon in Frage.

In einer weiteren Ausgestaltungsform der Erfindung weist das Inertmaterial eine Korngrößenverteilung auf, die einen d50-Wert zwischen 30 nm und 500 nm sowie einen d90-Wert von weniger als 2 µm besitzt.

Ferner hat es sich als zweckmäßig herausgestellt, zwischen dem Schalenbereich und dem Kernbereich eine poröse Barriereschicht anzuordnen. Diese Barriereschicht dient zur wechselseitigen Abgrenzung des Kernbereichs und des Schalenbereiches und verhindert insbesondere eine Diffusion der unterschiedlichen Dotierstoffe des Kernbereichs und des Schalenbereichs.

Die Barriereschicht besteht bevorzugt aus einem bereits erwähnten inerten keramischen Material auf der Basis von Zirkonoxid, yttriumverstärkten Zirkonoxid, Aluminiumoxid, Yttriumoxid, Calciumoxid, Ceroxid oder Magnesiumoxid, wobei sie bevorzugt eine Porosität von mehr als 40 Vol.% und eine Schichtdicke von weniger als 1 mm, bevorzugt von weniger als 500 µm aufweist.

Das Volumenverhältnis des Kernbereiches einerseits und des Schalenbereichs andererseits kann je nach Größe der Speicherstruktur an sich variieren, da durch die Geometrie und die Größe der Speicherstruktur die Diffusionswege vorgegeben sind, die durch das Reaktionsgas, das mit dem Speichermedium reagiert zurückgelegt werden muss. Es hat sich herausgestellt, dass ein Volumenverhältnis von Schalenbereich zu Kernbereich zwischen 10:1 und 1:10 liegt.

Weitere Merkmale der Erfindung und weitere Vorteile werden anhand der folgenden Figuren näher erläutert. Bei der Figurenbeschreibung handelt es sich um beispielhafte Ausgestaltungsformen der Erfindung, die keine Einschränkung des Schutzbereiches darstellen.

Dabei zeigen:
Figur 1 eine schematische Darstellung der Wirkungsweise einer elektrischen Speicherzelle,
Figur 2 eine Speicherstruktur mit Kernbereich und Schalenbereich mit vollständig vom Schalenbereich umschlossenen Kernbereich,
Figur 3 eine Speicherstruktur mit Kernbereich und Schalenbereich hergestellt durch ein Laminierverfahren.

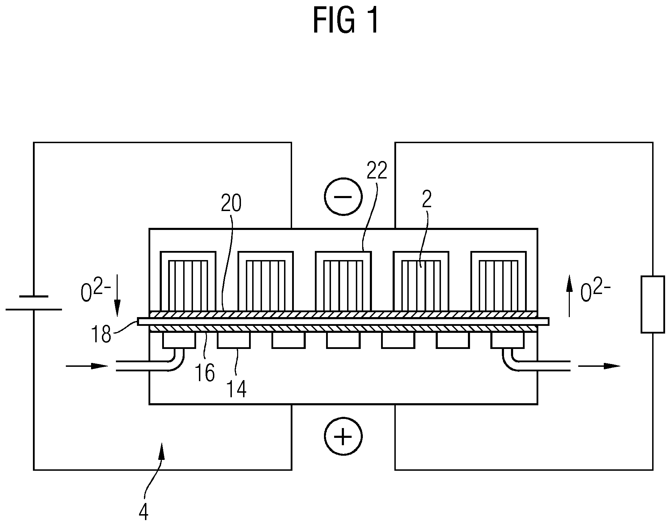

Anhand von Figur 1 soll zunächst schematisch die Wirkungsweise einer Rechargeable Oxide Batterie (ROB) beschrieben werden, insoweit dies für die vorliegende Beschreibung der Erfindung notwendig ist. Ein üblicher Aufbau einer ROB besteht darin, dass an einer positiven Elektrode 16, die auch als Luftelektrode bezeichnet wird, ein Prozessgas, insbesondere Luft, über eine Gaszufuhr 14 eingeblasen wird, wobei beim Entladen (Stromkreis auf der rechten Bildseite) der Luft Sauerstoff entzogen wird. Der Sauerstoff gelangt in Form von Sauerstoffionen O²⁻ durch einen an der positiven Elektrode anliegenden Feststoffelektrolyten 18, zu einer negativen Elektrode 20, die auch als Speicherelektrode bezeichnet wird. Diese steht über ein gasförmiges Redoxpaar, z.B. ein Wasserstoff-Wasserdampf-Gemisch mit einem porösen Speichermedium in Verbindung. Würde an der negativen Elektrode 20 eine dichte Schicht des aktiven Speichermaterials vorliegen, so würde die Ladekapazität der Batterie schnell erschöpft werden.

Aus diesem Grund ist es zweckmäßig, an der negativen Elektrode 20 als Energiespeichermedium eine Speicherstruktur 2 aus porösem Material einzusetzen, das ein funktional wirkendes oxidierbares Material als ein aktives Speichermaterial 6, bevorzugt in Form von Eisen und/oder Eisenoxid enthält.

Über ein beim Betriebszustand der Batterie gasförmiges Redoxpaar, beispielsweise H₂/H₂O, werden die, durch den Festkörperelektrolyten 18 transportierten Sauerstoffionen nach ihrer Entladung an der negativen Elektrode in Form von Wasserdampf durch Porenkanäle der porösen Speicherstruktur 2, die das aktive Speichermaterial 6 umfasst, transportiert. Je nachdem, ob ein Entlade- oder Ladevorgang vorliegt, wird das Metall bzw. das Metalloxid (Eisen/Eisenoxid) oxidiert oder reduziert und der hierfür benötigte Sauerstoff durch das gasförmige Redoxpaar H₂/H₂O angeliefert oder zum Festkörperelektrolyten 18 bzw. zur negativen Elektrode 20 zurück transportiert. Dieser Mechanismus des Sauerstofftransportes über ein Redoxpaar wird als Shuttlemechanismus bezeichnet.

Der Vorteil des Eisens als oxidierbares Material, also als aktives Speichermaterial 6, besteht darin, dass es bei seinem Oxidationsprozess in etwa dieselbe Ruhespannung von etwa 1 V aufweist, wie das Redoxpaar H₂/H₂O bei einem Partialdruckverhältnis von 1, andernfalls ergibt sich ein erhöhter Widerstand für den Sauerstofftransport durch die diffundierenden Komponenten dieses Redoxpaares.

Die Diffusion der Sauerstoffionen durch den Feststoffelektrolyten 18 benötigt eine hohe Betriebstemperatur von 600 bis 900°C der beschriebenen ROB, aber auch für die optimale Zusammensetzung des Redoxpaares H₂/H₂O in Gleichgewicht mit dem Speichermaterial ist dieser Temperaturbereich vorteilhaft. Hierbei ist nicht nur die Struktur der Elektroden 16 und 20 und des Elektrolyten 18 einer hohen thermischen Belastung ausgesetzt, sondern auch die Speicherstruktur 2, die das aktive Speichermaterial 6 umfasst. Bei den stetigen Zyklen von Oxidation und Reduktion neigt das aktive Speichermaterial dazu, zu versintern und/oder zu vergröbern. Versintern bedeutet, dass die einzelnen Körner immer mehr miteinander durch Diffusionsprozesse verschmelzen, die reaktive Oberfläche sinkt und die für den Gastransport erforderliche durchgehend offene Porenstruktur verschwindet. Vergröbern bedeutet, dass einzelne Körner auf Kosten anderer Körner wachsen, wobei die Anzahldichte und die reaktive Oberfläche der Körner abnimmt. Bei einer geschlossenen Porenstruktur kann das Redoxpaar H₂/H₂O die aktive Oberfläche des aktiven Speichermaterials 6 nicht mehr erreichen, so dass bereits nach einer Teilentladung des Speichers der Innenwiderstand der Batterie sehr hoch wird, was eine weitere technisch sinnvolle Entladung verhindert.

Ein Vorteil der ROB besteht darin, dass sie durch ihre kleinste Einheit, nämlich die Speicherzelle modular nahezu unbegrenzt erweiterbar ist. Somit ist eine kleine Batterie für den stationären Hausgebrauch ebenso darstellbar wie eine großtechnische Anlage zur Speicherung der Energie eines Kraftwerkes.

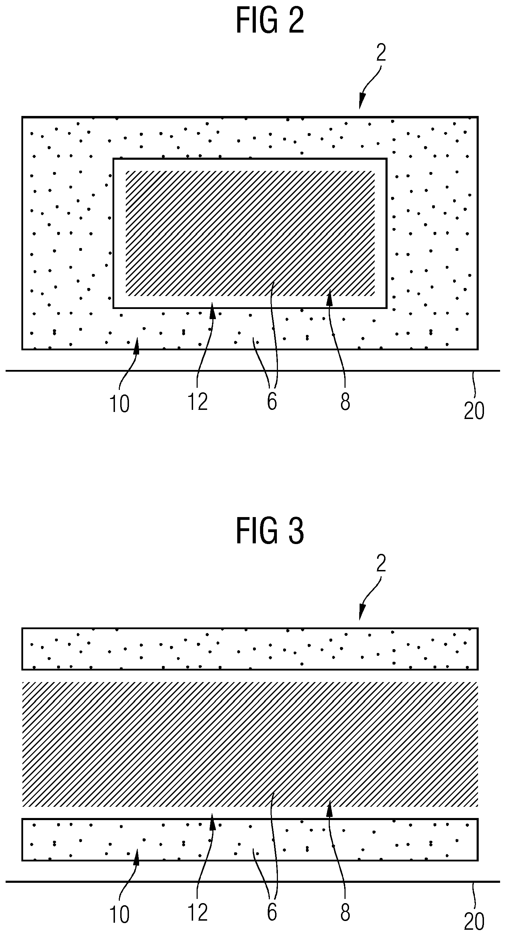

In Figur 2 ist schematisch eine Speicherstruktur 2 mit einem Kernbereich 8 und einem Schalenbereich 10 dargestellt, wobei Kernbereich 8 und Schalenbereich 10 durch eine Barriereschicht 12 getrennt sind. Beide Bereiche, Kernbereich 8 und Schalenbereich 10, weisen ein Speichermaterial 6 auf, das im Wesentlichen auf der Basis von Eisen und/oder Eisenoxid besteht. Der Kernbereich 8 weist dabei eine Porosität von 48% auf, wobei das Eisenoxid, also das Speichermaterial 6, mit einer Dotierung aus Molybdän versehen ist. Der Gesamtanteil der Dotierung durch Molybdän liegt bei einer Konzentration von weniger als 10 Mol.%. Das Molybdän wirkt als Oxidationsbeschleuniger, wobei das Eisenoxid bzw. das Eisen bei Anströmen des Shuttlegases H₂/H₂O schneller auf eine höhere Oxidationsstufe gebracht wird, als dies ohne die Zugabe von Molybdän der Fall wäre.

Um den Kernbereich 8 ist die Barriereschicht 12 angeordnet, die eine Dicke von 400 µm aufweist und aus einem inerten Material auf der Basis von Zirkonoxid besteht. Sie weist eine Porosität von ebenfalls 48% auf. Um die Barriereschicht 12 herum ist der Schalenbereich 10 angeordnet, der ebenfalls aus einem Gemisch von Eisen und Eisenoxid besteht, das in diesem Fall mit Chrom bzw. Kobalt dotiert ist. Diese Dotierstoffe wirken als Reaktionsinhibitor und verlangsamen die Reaktionsgeschwindigkeit der Oxidation des Eisen bzw. des Eisenoxides. Auf diese Art und Weise wird der Kernbereich 8 schneller vollständig aufoxidiert als der Schalenbereich 10. Wenn sich durch die Volumenzunahme während der Oxidation die Poren im Kernbereich 8 derart verengt bzw. geschlossen haben, dass das Shuttlegas den Kernbereich nur noch erschwert bzw. nicht mehr erreichen kann und/oder das aktive Speichermaterial die unter den vorherrschenden Bedingungen höchstmögliche Oxidationsstufe erreicht hat, ist die Oxidationsreaktion im Kernbereich im Wesentlichen abgeschlossen.

Parallel zur Reaktion im Kernbereich 8 folgt in verlangsamter Weise die Reaktion im Schalenbereich 10. Diese läuft aufgrund der Inhibitoren langsamer ab als die Reaktion im bereits vorher erschöpften Kernbereich 8. Die Batterie ist vollständig entladen, wenn das Eisen bzw. das Eisenoxid in der Speicherstruktur vollständig in die höchste mögliche Oxidationsstufe gebracht ist, bzw. wenn alle Porenkanäle, die für die Strömung des Shuttlegases H₂/H₂O notwendig sind, so weit verengt oder geschlossen sind, dass das Gas seine Transportfunktion nicht mehr ausreichend erfüllen kann. Im optimalen Fall ist beim Diffusionsabriss aufgrund geschlossener Poren auch das gesamte aktive Speichermaterial 6 vollständig oxidiert. Die Batterie ist in diesem Fall vollständig entladen. In einem Ladeprozess wird das Eisenoxid wieder reduziert und Sauerstoffionen werden über die Speicherelektrode 20, den Feststoffelektrolyten 18 und die Luftelektrode 16 wieder an die Umgebung abgegeben. Das Eisen liegt dann wieder in elementarer Form oder in Form von Eisenoxid mit niedrigerer Oxidationsstufe vor.

Die Speicherstruktur, wie sie in Figur 2 dargestellt ist, kann beispielsweise durch ein isostatisches oder ein uniaxiales Pressverfahren hergestellt werden. Hierbei wird zunächst das Kernmaterial gepresst und der so entstandene Grünkörper ggf. durch einen Sinterprozess mechanisch verfestigt. Anschließend kann ggf. das Material der Barriereschicht beispielsweise durch einen CVD-Abscheidungsprozess aufgebracht werden. Der so beschichtete Grünkörper wird nun ein weiteres Mal in eine Presse gegeben, wobei er von dem pulverförmigen Speichermaterial 6 des zu bildenden Schalenbereiches 10 umgeben ist. Diese Pulverschüttung mit dem Grünkörper im Inneren wird ein weiteres Mal gepresst, wobei nach dem Entformen und ggf. nach einer weiteren Wärmebehandlung zur Verfestigung des Schalenbereiches 10 die in Figur 2 abgebildete Speicherstruktur 2 entsteht. In Figur 3 ist eine Speicherstruktur 2 dargestellt, die durch ein schichtgebendes Verfahren hergestellt ist. Hierbei wird zunächst durch ein Tape Casting-Verfahren der Schalenbereich 10 dargestellt, auf diesen wird wiederum das Speichermaterial 6 des Kernbereiches 8 gegossen und ausgehärtet. In einem weiteren Verfahrensschritt wird auf dem Kernbereich ein weiterer Schalenbereich durch Tape Casting aufgebracht.

Die einzelnen Schichten, wie sie in Figur 3 dargestellt sind, können auch einzeln hergestellt werden und anschließend laminiert werden. Hierbei kann jeweils optional die Barriereschicht 12, bevorzugt durch ein Abscheideverfahren auf den Kernbereich 8 aufgebracht werden.

## Patentansprüche

1. Speicherstruktur einer elektrischen Metall-Luft-Energiespeicherzelle (4) umfassend ein Speichermaterial (6), **dadurch gekennzeichnet, dass** die Speicherstruktur (2) einen Kernbereich (8) und mindestens einen Schalenbereich (10) aufweist, wobei das Material im Kernbereich (8) eine höhere Porosität aufweist als das Material des Schalenbereichs (10) und wobei zwischen dem Schalenbereich und dem Kernbereich eine poröse Barriereschicht (12) vorgesehen ist.

2. Speicherstruktur nach Anspruch 1, **dadurch gekennzeichnet, dass** das Speichermaterial (6) im Schalenbereich (10) und im Kernbereich (8) Eisen und/oder Eisenoxid umfasst.

3. Speicherstruktur nach Anspruch 1 oder 2, **dadurch gekennzeichnet, dass** das Speichermaterial (6) im Schalenbereich (10) eine Dotierung aufweist, die eines oder mehrere Elemente aus der Gruppe Chrom, Kobalt, Aluminium, Silizium, Titan oder Mangan umfasst.

4. Speicherstruktur nach einem der Ansprüche 1 bis 3, **dadurch gekennzeichnet, dass** das Speichermaterial (6) im Kernbereich (8) eine Dotierung aufweist, die eines oder mehrere Elemente aus der Gruppe Molybdän, Vanadium, Bor oder Bismut umfasst.

5. Speicherstruktur nach einem der vorhergehenden Ansprüche, **dadurch gekennzeichnet, dass** das Speichermaterial (6) im Schalenbereich (10) eine Porosität von weniger als 40 % aufweist.

6. Speicherstruktur nach einem der vorhergehenden Ansprüche, **dadurch gekennzeichnet, dass** das Speichermaterial (6) im Kernbereich (8) eine Porosität von weniger als 50 % aufweist.

7. Speicherstruktur nach einem der vorhergehenden Ansprüche, **dadurch gekennzeichnet, dass** das Speichermaterial (6) im Schalenbereich (10) und im Kernbereich (8) eine Korngrößenverteilung aufweist, deren d50-Wert kleiner als 5 µm und ein d90-Wert kleiner als 10 µm ist.

8. Speicherstruktur nach einem der vorhergehenden Ansprüche, **dadurch gekennzeichnet, dass** im Speichermaterial (6) des Schalenbereichs (10) und des Kernbereichs (8) Inertmaterial eingelagert ist.

9. Speicherstruktur nach Anspruch 8, **dadurch gekennzeichnet, dass** das Inertmaterial auf der Basis von Zirkonoxid, yttriumverstärkten Zirkonoxid, Aluminiumoxid, Yttriumoxid, Calciumoxid, Ceroxid oder Magnesiumoxid oder Kombinationen hiervon besteht.

10. Speicherstruktur nach Anspruch 8 oder 9, **dadurch gekennzeichnet, dass** das Inertmaterial eine Korngrößenverteilung mit einem d50-Wert zwischen 30 nm und 500 nm und einem d90-Wert von weniger als 2 µm aufweist.

11. Speicherstruktur nach Anspruch 10, **dadurch gekennzeichnet, dass** die Barriereschicht (12) aus inertem keramischen Material besteht, insbesondere auf der Basis von Zirkonoxid, yttriumverstärkten Zirkonoxid, Aluminiumoxid, Yttriumoxid, Calciumoxid, Ceroxid oder Magnesiumoxid oder Kombinationen hiervon besteht.

12. Speicherstruktur nach Anspruch 10 oder 11, **dadurch gekennzeichnet, dass** die Barriereschicht (12) eine Dicke von weniger als 1 mm, insbesondere weniger als 500 µm hat.

13. Speicherstruktur nach einem der Ansprüche 10 bis 12, **dadurch gekennzeichnet, dass** die Barriereschicht (12) eine offen Porosität von mehr als 40 % aufweist.

14. Speicherstruktur nach einem der vorhergehenden Ansprüche, **dadurch gekennzeichnet, dass** das Volumenverhältnis zwischen Schalenbereich (10) und Kernbereich (8) im Bereich zwischen 10:1 und 1:10 liegt.

## Claims

1. Storage structure in an electrical metal/air energy storage cell (4) comprising a storage material (6), **characterized in that** the storage structure (2) has a core region (8) and at least one shell region (10), the material in the core region (8) having a higher porosity than the material of the shell region (10) and a porous barrier layer (12) being provided between the shell region and the core region.

2. Storage structure according to Claim 1, **characterized in that** the storage material (6) in the shell region (10) and in the core region (8) comprises iron and/or iron oxide.

3. Storage structure according to Claim 1 or 2, **characterized in that** the storage material (6) in the shell region (10) is doped, the doping comprising one or more elements from the group of chromium, cobalt, aluminium, silicon, titanium and manganese.

4. Storage structure according to any of Claims 1 to 3, **characterized in that** the storage material (6) in the core region (8) is doped, the doping comprising one or more elements from the group of molybdenum, vanadium, boron and bismuth.

5. Storage structure according to any of the preceding claims, **characterized in that** the storage material (6) in the shell region (10) has a porosity of less than 40%.

6. Storage structure according to any of the preceding claims, **characterized in that** the storage material (6) in the core region (8) has a porosity of less than 50%.

7. Storage structure according to any of the preceding claims, **characterized in that** the storage material (6) in the shell region (10) and in the core region (8) has a particle size distribution having a d50 of less than 5 µm and a d90 of less than 10 µm.

8. Storage structure according to any of the preceding claims, **characterized in that** the inert material is incorporated in the storage material (6) of the shell region (10) and of the core region (8).

9. Storage structure according to Claim 8, **characterized in that** the inert material is based on zirconia, yttrium-stabilized zirconia, alumina, yttria, calcium oxide, ceria or magnesium oxide or combinations thereof.

10. Storage structure according to Claim 8 or 9, **characterized in that** the inert material has a particle size distribution having a d50 of between 30 nm and 500 nm and a d90 of less than 2 µm.

11. Storage structure according to Claim 10, **characterized in that** the barrier layer (12) consists of inert ceramic material, especially based on zirconia, yttrium-stabilized zirconia, alumina, yttria, calcium oxide, ceria or magnesium oxide or combinations thereof.

12. Storage structure according to Claim 10 or 11, **characterized in that** the barrier layer (12) has a thickness of less than 1 mm, especially less than 500 µm.

13. Storage structure according to any of Claims 10 to 12, **characterized in that** the barrier layer (12) has an open porosity of more than 40%.

14. Storage structure according to any of the preceding claims, **characterized in that** the volume ratio between the shell region (10) and core region (8) is in the range between 10:1 and 1:10.

## Revendications

1. Structure d'accumulation d'une cellule (4) d'accumulation d'énergie électrique métal-air, comprenant une matière (6) d'accumulation, **caractérisée en ce que** la structure (2) d'accumulation a une partie (8) de coeur et au moins une partie (10) de coque, la matière dans la partie (8) de coeur ayant une porosité plus grande que la matière de la partie (10) de coque et une couche (12) poreuse formant barrière étant prévue entre la partie de coque et la partie de coeur.

2. Structure d'accumulation suivant la revendication 1, **caractérisée en ce que** la matière (6) d'accumulation comprend du fer et/ou de l'oxyde de fer dans la partie (10) de coque et dans la partie (8) de coeur.

3. Structure d'accumulation suivant la revendication 1 ou 2, **caractérisée en ce que** la matière (6) d'accumulation a, dans la partie (10) de coque, un dopage, qui comprend un ou plusieurs éléments choisis dans le groupe du chrome, du cobalt, de l'aluminium, du silicium, du titane ou du manganèse.

4. Structure d'accumulation suivant l'une des revendications 1 à 3, **caractérisée en ce que** la matière (6) d'accumulation a, dans la partie (8) de coeur, un dopage, qui comprend un ou plusieurs éléments choisis dans le groupe du molybdène, du vanadium, du bore ou du bismuth.

5. Structure d'accumulation suivant l'une des revendications précédentes, **caractérisée en ce que** la matière (6) d'accumulation a une porosité de moins de 40 % dans la partie (10) de coque.

6. Structure d'accumulation suivant l'une des revendications précédentes, **caractérisée en ce que** la matière (6) d'accumulation a une porosité de moins de 50 % dans la partie (8) de coeur.

7. Structure d'accumulation suivant l'une des revendications précédentes, **caractérisée en ce que** la matière (6) d'accumulation a, dans la partie (10) de coque et dans la partie (8) de coeur, une répartition granulométrique dont la valeur d50 est plus petite que 5 µm et dont la valeur d90 est plus petite que 10 µm.

8. Structure d'accumulation suivant l'une des revendications précédentes, **caractérisée en ce que** de la matière inerte est insérée dans la matière (6) d'accumulation de la partie (10) de coque et de la partie (8) de coeur.

9. Structure d'accumulation suivant la revendication 8, **caractérisée en ce que** la matière inerte est constituée à base d'oxyde de zirconium, d'oxyde de zirconium renforcé par de l'yttrium, d'oxyde d'aluminium, d'oxyde d'yttrium, d'oxyde de calcium, d'oxyde de cérium ou d'oxyde de magnésium ou de leurs combinaisons.

10. Structure d'accumulation suivant la revendication 8 ou 9, **caractérisée en ce que** la matière inerte a une répartition granulométrique, ayant une valeur d50 comprise entre 30 nm et 500 nm et une valeur d90 plus petite que 2 µm.

11. Structure d'accumulation suivant la revendication 10, **caractérisée en ce que** la couche (12) formant barrière est en une matière céramique inerte, notamment à base d'oxyde de zirconium, d'oxyde de zirconium renforcé par de l'yttrium, d'oxyde d'aluminium, d'oxyde d'yttrium, d'oxyde de calcium, d'oxyde de cérium ou d'oxyde de magnésium ou de leurs combinaisons.

12. Structure d'accumulation suivant la revendication 10 ou 11, **caractérisée en ce que** la couche (12) formant barrière a une épaisseur plus petite que 1 mm, notamment plus petite que 500 µm.

13. Structure d'accumulation suivant l'une des revendication 10 à 12, **caractérisée en ce que** la couche (12) formant barrière a une porosité ouverte de plus de 40 %.

14. Structure d'accumulation suivant l'une des revendications précédentes, **caractérisée en ce que** le rapport en volume entre la partie (10) de coq et la partie (8) de coeur est compris entre 10:1 et 1:10.
